# EUROPÄISCHE PATENTSCHRIFT

(11) **EP 1 189 440 B1**
(45) Veröffentlichungstag und Bekanntmachung des Hinweises auf die Patenterteilung: **16.04.2008**
(21) Anmeldenummer: 01121040.8
(22) Anmeldetag: 01.09.2001
(51) Int. Cl.: H04N 7/173, H04N 7/08, H04N 5/445, H04N 5/38

(54) **Zusatzgerät zur Darstellung von Fernsehrundfunksignalen und Internetsignalen unter optimierten Benutzungsbedingungen**
Accessory device for displaying television broadcast and internet signals under optimised conditions of use
Dispositif accessoire pour l'affichage de signaux de télédiffusion et d'internet sous des conditions d'utilisation optimisées

(30) Priorität: 05.09.2000 DE 10043538
(43) Veröffentlichungstag der Anmeldung: 20.03.2002
(73) Patentinhaber: Grundig Multimedia B.V., 1083 HJ Amsterdam (NL)
(72) Erfinder: Herfet, Thorsten, Dr.-Ing., 90592 Lindelburg (DE)
(74) Vertreter: Pröll, Jürgen

(56) Entgegenhaltungen:
- WO-A-00/29960
- WO-A-99/34314
- WO-A-99/34599
- DE-U- 29 917 842

## Beschreibung

Die Erfindung betrifft ein Zusatzgerät zur Darstellung von Fernsehrundfunksignalen und Internetsignalen unter optimierten Benutzungsbedingungen.

Es ist bereits bekannt, auf dem Bildschirm eines Fernsehgerätes Fernsehrundfunksignale oder Internetsignale oder Fernsehrundfunksignale und Internetsignale in überlagerter Form anzuzeigen. Ein derartiges Fernsehgerät benötigt neben einem ohnehin vorhandenen Antennen- oder Kabelanschluss, über welchen dem Fernsehgerät Fernsehrundfunksignale zugeführt werden, und einer zugehörigen Frontend-Schaltung weiterhin auch einen Anschluss an eine Telefonleitung, beispielsweise eine ISDN-Telefonleitung, sowie eine integrierte oder dem Fernsehgerät beigestellte Internetbox. In dieser erfolgt eine Umwandlung der über die Telefonleitung empfangenen Internetsignale in auf dem Bildschirm des Fernsehgerätes darstellbare Signale. Der Entwicklungsaufwand für ein derartiges Fernsehgerät mit integrierter oder beigestellter Internetbox ist jedoch sehr hoch, so dass derartige beispielsweise von den Firmen GRUNDIG und LOEWE käuflich erwerbbare Geräte vergleichsweise teuer sind.

Weiterhin ist es bereits bekannt, auf dem Bildschirm eines einem Personalcomputer zugehörigen Monitors Fernsehrundfunksignale oder Internetsignale anzuzeigen, sofern der Personalcomputer an eine Telefonleitung angeschlossen ist und weiterhin auch mit einem Antennen- oder Kabelanschluss und einer eingesetzten Fernseheinsteckplatine versehen ist.

Derartige Lösungen werden beispielsweise von den Firmen MIRO und PINNACLE angeboten.

Ferner sind sogenannte Web-Pads bekannt, beispielsweise von den Firmen NATIONAL und DOSCH & AMAND.

Bei Fernsehgeräten wird üblicherweise ein Betrachtungsabstand gewählt, der dem 6-8-fachen der Bildhöhe entspricht. Der Fernsehzuschauer sitzt im allgemeinen zurückgelehnt in einem Sessel oder auf einem Sofa. Der Benutzer eines Personal-Computers hat üblicherweise einen Betrachtungsabstand, der dem 2-3-fachen der Bildhöhe entspricht, und sitzt zur Bedienung der Tastatur des Personal-Computers vorgebeugt an einem Tisch.

Aus WO 99/34599 A1 ist eine Vorrichtung offenbart, welche es ermöglicht, auf zwei physikalisch getrennten Bildschirmen, Rundfunkempfangssignale und Internetsignale anzuzeigen. Die Vorrichtung zeichnet sich dadurch aus, dass eine stringente Trennung der Darstellung zwischen Textsignalen (Internetsignalen) und Rundfunksignalen (TV-Signalen) erfolgt.

Rundfunksignale und Internetsignale werden über eine gemeinsame Funkübertragungsstreke zu einem Zusatzgerät übertragen.

Aus US 6 097 441 und US 6 104 334 sind Fernbedienungen mit Displays, welche auch als "neudeutsch" PDA's bezeichnet werden, bekannt. Bei diesen Geräten handelt es sich um Fernbedienungen, auf welchen Fernsehrundfunksignale oder Internetsignale anzeigbar sind. Es wird aber hierbei nicht auf eine optimierte Nutzungsbedingung geachtet.

Ausgehend vom Stand der Technik liegt der Erfindung die Aufgabe zugrunde, einen Weg aufzuzeigen, wie auf einfache Weise mittels eines einen Bildschirm aufweisenden Gerätes sowohl Fernsehrundfunksignale als auch Internetsignale unter optimierten Nutzungsbedingungen angezeigt werden können.

Diese Aufgabe wird durch ein Zusatzgerät mit den im Anspruch 1 angegebenen Merkmalen gelöst. Vorteilhafte Ausgestaltungen und Weiterbildungen der Erfindung sind in den abhängigen Ansprüchen angegeben. Die Ansprüche 11 bis 13 betreffen eine Anlage zur Darstellung von Fernsehrundfunksignalen und Internetsignalen.

Die Vorteile der Erfindung bestehen insbesondere darin, dass das beanspruchte Zusatzgerät keine eigene Frontendschaltung und auch keine Fernseheinsteckplatine benötigt und dennoch dazu in der Lage ist, sowohl Fernsehrundfunksignale als auch Internetsignale, gegebenenfalls auch im Sinne einer gemeinsamen Bildschirmdarstellung, anzuzeigen. Die benötigte Frontendschaltung ist vorzugsweise in einem ohnehin vorhandenen Fernsehgerät enthalten. Der Empfang und die notwendige Verarbeitung der Internetsignale erfolgt vorzugsweise in einem ohnehin vorhandenen Personalcomputer. Sowohl das Fernsehgerät als auch der Personalcomputer werden mit einem Funksender ausgestattet. Mittels dieses Funksenders werden vom Fernsehgerät empfangene und verarbeitete Fernsehrundfunksignale bzw. durch den Personalcomputer empfangene und verarbeitete Internetsignale drahtlos an jeweils zugehörigen Funkempfänger im Zusatzgerät gesendet. Dieses weist lediglich die erforderlichen Umschalte- und Konversionsmittel auf, die zur Darstellung der Fernsehrundfunk- und/oder Internetsignale auf dem Bildschirm des Zusatzgerätes notwendig sind.

Besonders geeignet ist das beanspruchte Zusatzgerät zur Verwendung in Wohnungen oder Häusern, in denen ohnehin bereits ein Fernsehgerät und ein Personalcomputer zur Verfügung stehen. Von diesen Geräten aus, die jeweils mit einem Funksender versehen sind, können Fernsehrundfunksignale bzw. Internetsignale an das gegebenenfalls in einem anderen Zimmer aufgestellte Zusatzgerät übertragen und auf dessen Bildschirm angezeigt werden. Vorzugsweise sind die drahtlosen Verbindungen zwischen dem Fernsehgerät und dem Zusatzgerät einerseits und dem Personalcomputer und dem Zusatzgerät andererseits bidirektional. In diesem Fall können beispielsweise auch Bediensignale und Datensignale vom Zusatzgerät aus an das Fernsehgerät und an den Personalcomputer übertragen werden. Damit wird es beispielsweise ermöglicht, vom Zusatzgerät aus bezüglich des Fernsehgerätes eine Programmumschaltung vorzunehmen, Bildparameter wie Helligkeit und Kontrast zu verstellen, das Fernsehgerät aus- oder aus dem Bereitschaftsbetrieb einzuschalten. Weiterhin wird es dadurch ermöglicht, vom Zusatzgerät aus neue Internetseiten aufzurufen, deren Inhalt vom Telefonanschluss aus über den Personalcomputer an das Zusatzgerät weitergeleitet wird.

Zur Eingabe von Bedienbefehlen weist das Zusatzgerät vorzugsweise einen berührungssensitiven Bildschirm sowie einen Eingabestift auf. Im Zusatzgerät sind Menüdarstellungen abgespeichert, die mittels des Eingabestiftes aktiviert werden können.

Vorzugsweise enthalten eine oder mehrere der Menüdarstellungen auch ein Eingabefeld, auf welchem mittels des Eingabestiftes alphanumerische Zeichen eingegeben werden können. Diese werden von im Zusatzgerät enthaltenen Schrifterkennungsmitteln ausgewertet und im Zusatzgerät in geeignete Befehlstelegramme umgesetzt, die drahtlos vom Zusatzgerät an das Fernsehgerät oder den Personalcomputer zurückübertragen werden können.

Ein derartiges Zusatzgerät kann demnach alle Funktionen eines vorhandenen Fernsehempfängers nutzen und erlaubt auch ein Surfen im Internet.

Die uni- oder bidirektionale Übertragung der Signale zwischen dem Zusatzgerät und dem Fernsehempfänger und zwischen dem Zusatzgerät und dem Personal-Computer kann gegebenenfalls auch leitungsgebunden erfolgen, beispielsweise unter Verwendung eines Haus-Busses.

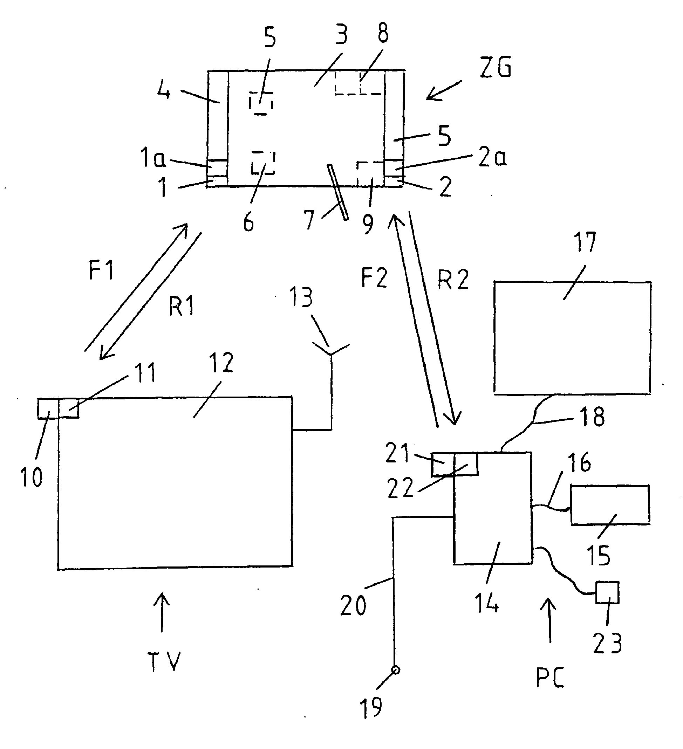

Weitere vorteilhafte Eigenschaften der Erfindung ergeben sich aus der Erläuterung eines Ausführungsbeispiels anhand der Figur. In dieser sind die zum Verständnis der Erfindung notwendigen Bestandteile einer Anlage zur Darstellung von Fernsehrundfunksignalen und Internetsignalen auf dem Bildschirm 3 eines Zusatzgerätes ZG dargestellt.

Die gezeigte Anlage weist außer dem Zusatzgerät ZG ein Fernsehgerät TV und einen Personalcomputer PC auf, wobei alle diese Geräte in verschiedenen Räumen eines Hauses angeordnet sein können.

Der Fernsehempfänger TV ist an eine Empfangsantenne 13 oder alternativ dazu an eine Kabelübertragungsstrecke angeschlossen. Er weist einen Bildschirm 12 auf. Weiterhin ist der Fernsehempfänger mit einem Funksender 10 und einem Empfänger 11 ausgestattet. Die Funkübertragungsstrecke F1 zwischen dem Fernsehempfänger TV und dem Zusatzgerät ZG ist zur Übertragung von Fernsehrundfunksignalen vorgesehen. Bei diesen handelt es sich vorzugsweise um FBAS - Signale, die aus dem Fernsehempfänger abgeleitet sind. Die Übertragung dieser Signale erfolgt im Gigahertz-Bereich, beispielsweise im Bereich von 2,4 - 2,4835 GHZ. Der Rückkanal R1 dient zur Übertragung von Bedien- und Datensignalen vom Zusatzgerät ZG zum Fernsehempfänger TV. Beispielsweise handelt es sich bei den genannten Befehlen um einen Einschaltbefehl, einen Ausschaltbefehl oder um einen Befehl zur Programmumschaltung. Die Übertragung dieser Befehle erfolgt im Megahertz-Bereich, beispielsweise im Bereich von 433,05 - 434,79 MHZ.

Der Personalcomputer PC ist über ein Kabel 20 und einen Telefonanschluss 19 an eine Telefonleitung, beispielsweise eine ISDN-Leitung, angeschlossen. Der PC weist ein Gehäuse 14, in welchem die übliche Hardware angeordnet ist, eine Maus 23, eine über ein Kabel 16 mit dem Gehäuse verbundene Tastatur 15, einen Drucker und einen über ein Kabel 18 mit dem Gehäuse verbundenen Monitor 17 auf. Weiterhin ist auch der Personalcomputer mit einem Funksender 21 und einem Empfänger 22 ausgestattet. Die Funkübertragungsstrecke F2 zwischen dem Personalcomputer und dem Zusatzgerät ZG ist zur Übertragung von Internetsignalen vorgesehen, die im MPEG-2-TS-Format vorliegen. Die Übertragung dieser Signale erfolgt ebenfalls im oben genannten Gigahertzbereich, jedoch in einem anderen Kanal als die Fernsehrundfunksignale, die vom Fernsehgerät TV zum Zusatzgerät ZG übertragen werden. Der Rückkanal R2 dient zur Übertragung von Bedienbefehlen und Datensignalen vom Zusatzgerät ZG zum Personalcomputer PC. Beispielsweise handelt es sich bei den genannten Befehlen um einen Einschaltbefehl, einen Ausschaltbefehl, einen Anwahlbefehl für eine bestimmte Internetseite oder um Daten, die alphanumerische Zeichen enthalten, beispielsweise Namens- oder Adressenangaben. Die Übertragung dieser Signale erfolgt ebenfalls im oben genannten Megahertzbereich, jedoch in einem anderen Kanal als die vom Zusatzgerät an das Fernsehgerät übertragenen Bedien- und Datensignale.

Das Zusatzgerät ZG weist erste Funkempfangsmittel 1 auf, die zum drahtlosen Empfang der Fernsehrundfunksignale vorgesehen sind, die vom Fernsehgerät TV über die Funkübertragungsstrecke F1 übertragen werden. Weiterhin weist das Zusatzgerät ZG zweite Funkempfangsmittel 2 auf, die zum drahtlosen Empfang der Internetsignale vorgesehen sind, die vom Personalcomputer PC über die Funkübertragungsstrecke F2 übertragen werden. Ferner ist das Zusatzgerät ZG mit einem ersten Sender 1a versehen, welcher zur drahtlosen Ausstrahlung von Bedien- und Datensignalen vom Zusatzgerät ZG an das Fernsehgerät TV vorgesehen ist. Der zweite Sender 2a des Zusatzgerätes ZG dient zur drahtlosen Ausstrahlung von Bedien- und Datensignalen vom Zusatzgerät an den Personalcomputer PC.

Weiterhin weist das Zusatzgerät ZG einen Bildschirm 3 auf, bei dem es sich vorzugsweise um einen Flachbildschirm, beispielsweise einen TFT-Bildschirm oder einen auf Basis von OLEDs (organic light emitting diodes) realisierten Bildschirm, handelt. Zur Wiedergabe von Tonsignalen weist das Zusatzgerät ZG Lautsprecher 4, 5 auf.

Das Zusatzgerät ist vorzugsweise in drei Betriebsarten betreibbar. Eine erste Betriebsart ist eine Fernsehbetriebsart, in welcher Fernsehrundfunksignale auf dem Bildschirm 3 angezeigt werden. Eine zweite Betriebsart ist eine Internetbetriebsart, in welcher aus dem Internet abgeleitete Signal auf dem Bildschirm 3 dargestellt werden. Bei der dritten Betriebsart handelt es sich um eine gemischte Betriebsart, bei welcher Fernsehrundfunksignale und Internetsignale gleichzeitig auf dem Bildschirm 3 angezeigt werden, beispielsweise im Sinne einer überlagerten Darstellung oder einer Bild-im-Bild-Darstellung. Die zur Auswahl der Anzeigesignale notwendige Signalverarbeitungsschaltung 5, die unter anderem Umschalter, Austastmittel und Bildverkleinerungsmittel aufweist, ist integrierter Bestandteil des Zusatzgerätes ZG.

Die Bedienung des Zusatzgerätes ZG erfolgt vorzugsweise unter Verwendung eines Bedienstiftes 7. Um eine Eingabe mittels dieses Stiftes 7 zu ermöglichen, ist der Bildschirm 3 ein berührungssensitiver Bildschirm. Beabsichtigt der Benutzer, Bedienbefehle einzugeben, dann berührt er mit dem Bedienstift 7 zunächst ein Eingabefeld 9, welches beispielsweise in der unteren rechten Ecke des Bildschirms 3 angeordnet ist. Die Berührung dieses Eingabefeldes wird detektiert und als Reaktion darauf wird durch einen Controller des Zusatzgerätes aus einem Speicher 6 für Benutzerführungsinformationen eine erste dort abgespeicherte Menüseite aufgerufen und auf dem Bildschirm 3 dargestellt. Mittels dieser ersten Menüseite wird der Benutzer beispielsweise gefragt, ob er Fernsehbetrieb, Internetbetrieb oder gemischten Betrieb haben möchte. Mögliche Antworten auf diese Frage kann der Benutzer mittels des Bedienstiftes 7 dadurch eingeben, dass er mit dem Bedienstift ein jeweils zugehöriges Antwortfeld der ersten Menüseite berührt.

Als Reaktion auf dieses Antwortsignal ruft der Controller des Zusatzgerätes ZG aus dem Speicher 6 eine weitere Menüseite ab, die dem Antwortsignal zugehörige weitere Benutzerführungsinformationen enthält, usw..

Ein Eingeben von Antwortsignalen kann aber nicht nur durch Berühren eines Eingabefeldes mit dem Bedienstift 7 erfolgen, sondern auch durch eine Eingabe alphanumerischer Zeichen mittels des Bedienstiftes. Zu diesem Zweck sind auf den jeweiligen Menüseiten gegebenenfalls auch Schrift-Eingabefelder enthalten, welche in einzelne Eingabefelder für alphanumerische Zeichen unterteilt sind. Ein derartiges Schrift-Eingabefeld mit zwei Eingabefeldern für alphanumerische Zeichen ist in der Figur mit der Bezugsziffer 8 bezeichnet. Gibt der Benutzer mittels des Eingabestiftes 7 die alphanumerischen Zeichen eines einzugebenden Wortes nacheinander und abwechselnd in die beiden Zeicheneingabefelder des Schrift-Eingabefeldes 8 ein, dann wird dies durch Schrifterkennungsmittel des Zusatzgerätes erkannt und es erfolgt eine entsprechende Umwandlung der Daten in Bedienbefehle oder an das Fernsehgerät oder den Personalcomputer zu übertragende Sendedaten.

Mittels der beschriebenen Eingabemittel, die gegebenenfalls durch ein Mikrofon und/oder einen Trackball ergänzt werden können, können sowohl Bedienbefehle für das Fernsehgerät als auch Bedienbefehle für den Personalcomputer als auch an das Fernsehgerät oder den Personalcomputer zu übertragende Datensignale generiert werden. Dies erlaubt es beispielsweise im Internetbetrieb, auf dem Bildschirm 3 dargestellte Links zur Auswahl neuer Internetseiten zu aktivieren, so dass ein zugehöriger Befehl über den Rückkanal R2 an den Personalcomputer PC übertragen werden kann. Dieser ruft dann aus dem Internet die gewünschte neue Seite ab und überträgt sie über die Funkübertragungsstrecke F2 an das Zusatzgerät ZG. Dort wird sie auf dem Bildschirm 3 angezeigt und kann als Ausgangspunkt für die Anwahl weiterer Internetseiten dienen.

In dem Falle, dass am jeweiligen Einsatzort eine Fernseh- oder PC-Infrastruktur nicht vorhanden ist, kann gegebenenfalls eine oder beide dieser Komponenten auch in das Zusatzgerät integriert werden.

## Patentansprüche

1. Zusatzgerät (ZG) zur Darstellung von Fernsehrundfunksignalen und Internetsignalen, welches aufweist:
- erste Empfangsmittel (1) zum drahtlosen oder leitungsgebundenen Empfang von Fernsehrundfunksignalen, die von einem Fernsehrundfunkempfänger übertragen werden,
- zweite Empfangsmittel (2) zum drahtlosen oder leitungsgebundenen Empfang von Internetsignalen, die von einem Personalcomputer übertragen werdern,
- Signalverarbeitungsmittel (5) für die drahtlos oder leitungsgebunden empfangenen Fernsehrundfunksignale und die drahtlos oder leitungsgebunden empfangenen Internetsignale zur Erzeugung von Anzeigesignalen, und
- einen Bildschirm (3) zur Darstellung der Anzeigesignale,
**dadurch gekennzeichnet, dass**
das Zusatzgerät (ZG) drei Anzeigebetriebsarten aufweist, von denen eine erste Anzeigebetriebsart eine Anzeige von Rundfunksignalen, eine zweite Anzeigebetriebsart eine Anzeige von Internetsignalen und eine dritte Anzeigebetriebsart eine gemeinsame Anzeige von Fernsehrundfunksignalen und Internetsignalen ist, wobei
die ersten und zweiten Empfangsmittel (1, 2) Funkempfangsmittel sind und das Zusatzgerät (ZG) erste Sendemittel (1a) zur drahtlosen oder leitungsgebundenen Aussendung von Bedien- und/oder Datensignalen für den genannten Fernsehrundfunkempfänger aufweist und/oder es zweite Sendemittel (2a) zur drahtlosen oder leitungsgebundenen Aussendung von Bedien- und/oder Datensignalen für den genannten Personalcomputer aufweist.

2. Zusatzgerät nach Anspruch 1,
**dadurch gekennzeichnet, dass**
es einen Speicher (6) für Benutzerführungsinformationen enthält und die Benutzerführungsinformationen eine Vielzahl von Menüseiten aufweisen.

3. Zusatzgerät nach einem der Ansprüche 1 oder 2,
**dadurch gekennzeichnet, dass**
es Eingabemittel aufweist und die Eingabemittel einen Eingabestift (7) aufweisen und/oder der Bildschirm (3) ein berührungssensitiver Bildschirm ist.

4. Zusatzgerät nach Anspruch 3,
**dadurch gekennzeichnet, dass**
es erste Eingabe-Detektionsmittel aufweist, die den Ort einer Stifteingabe detektieren, sowie zweite Eingabe-Detektionsmittel, welche Schrifterkennungsmittel enthalten.

5. Zusatzgerät nach Anspruch 4,
**dadurch gekennzeichnet, dass**
auf dem Bildschirm ein Schrift-Eingabefeld (8) darstellbar ist, welche in einzelne Eingabefelder für alphanumerische Zeichen unterteilt ist und das Schrift-Eingabefeld (8) zwei Eingabefelder für alphanumerische Zeichen aufweist, in welche wechselweise die aufeinanderfolgenden Buchstaben bzw. Ziffern eines alphanumerischen Eingabesignals eingebbar sind.

6. Zusatzgerät nach einem der vorhergehenden Ansprüche 2 bis 5,
**dadurch gekennzeichnet, dass**
dessen Bildschirm (3) ein Eingabefeld (9) aufweist, bei dessen Berührung mittels des Eingabestiftes eine Bildschirmanzeige von Benutzerführungsinformationen ausgelöst wird.

7. Zusatzgerät nach einem der vorhergehenden Ansprüche,
**dadurch gekennzeichnet, dass**
die ersten und zweiten Empfangsmittel (1, 2) zum Empfang von Signalen ausgelegt sind, die in der Größenordnung von 2,4 - 2,4835 und/oder von 5,725 - 5,875 GHZ liegen und/oder die ersten und zweiten Sendemittel (1a, 2a) zur drahtlosen Aussendung von Signalen ausgelegt sind, die in der Größenordnung von 433,05 - 434,79 MHZ liegen.

8. Zusatzgerät nach einem der vorhergehenden Ansprüche,
**dadurch gekennzeichnet, dass**
es Lautsprecher (4, 5) zum Wiedergeben von Tonsignalen aufweist.

9. Zusatzgerät nach einem der Ansprüche 2 bis 8,
**dadurch gekennzeichnet, dass**
die Eingabemittel ein Mikrofon und/oder einen Trackball aufweisen.

10. Zusatzgerät nach einem der vorhergehenden Ansprüche,
**dadurch gekennzeichnet, dass**
der Bildschirm ein Flachbildschirm ist und/oder der Bildschirm ein TFT-Bildschirm oder ein OLEDs aufweisender Bildschirm ist.

11. Anlage zur Darstellung von Fernsehrundfunksignalen und Internetsignalen, welche ein Zusatzgerät (ZG) nach einem oder mehreren der vorhergehenden Ansprüche, einen Fernsehrundfunkempfänger (TV) und einen Personalcomputer (PC) aufweist, wobei der Fernsehrundfunkempfänger und der Personalcomputer jeweils mit einem Funksender (10, 21) versehen sind oder über eine Datenleitung mit dem Zusatzgerät verbunden sind.

12. Anlage nach Anspruch 11,
**dadurch gekennzeichnet, dass**
der Fernsehrundfunkempfänger ein Fernsehgerät, ein Satellitenempfänger oder eine Settop-Box ist.

13. Anlage nach Anspruch 11 oder 12,
**dadurch gekennzeichnet, dass**
der Fernsehrundfunkempfänger und der Personalcomputer jeweils einen Empfänger (11, 22) für vom Zusatzgerät (ZG) drahtlos oder leitungsgebunden ausgestrahlte Bedien- und/oder Datensignale aufweist.

## Claims

1. Accessory device (AD) for displaying television broadcast and Internet signals, having:
- first reception means (1) for wireless or line-conducted reception of television broadcast signals which are transmitted by a television broadcast receiver,
- second reception means (2) for wireless or line-conducted reception of Internet signals which are transmitted by a personal computer,
- signal processing means (5) for the television broadcast and Internet signals which are received wirelessly or line-conductedly for generating display signals, and
- a screen (3) for displaying the display signals,
**characterized in that**
the accessory device (AD) has three display operating modes, of which a first display operating mode is a display of broadcast signals, a second display operating mode is a display of Internet signals, and a third display operating mode is a joint display of television broadcast and Internet signals,
the first and second reception means (1, 2) being radio reception means, and the accessory device (AD) having first transmission means (1a) for wireless or line-conducted transmission of operating and/or data signals for the above-mentioned television broadcast receiver, and/or second transmission means (2a) for wireless or line-conducted transmission of operating and/or data signals for the above-mentioned personal computer.

2. Accessory device according to Claim 1,
**characterized in that**
it contains a memory (6) for user guidance information, and the user guidance information has multiple menu pages.

3. Accessory device according to Claim 1 or 2,
**characterized in that**
it has input means, and the input means have an input pen (7), and/or the screen (3) is a touch-sensitive screen.

4. Accessory device according to Claim 3,
**characterized in that**
it has first input detection means, which detect the location of a pen input, and second input detection means, which contain writing recognition means.

5. Accessory device according to Claim 4,
**characterized in that**
on the screen a writing input field (8), which is divided into individual input fields for alphanumeric characters, can be shown, and the writing input field (8) has two input fields for alphanumeric characters, into which input fields the successive letters or digits of an alphanumeric input signal can be entered alternately.

6. Accessory device according to one of the preceding claims 2 to 5,
**characterized in that**
its screen (3) has an input field (9), and when the input field is touched with the input pen, a screen display of user guidance information is initiated.

7. Accessory device according to one of the preceding claims,
**characterized in that**
the first and second reception means (1, 2) are designed for receiving signals which are in the order of magnitude of 2.4 - 2.4835 and/or 5.725 - 5.875 GHz, and/or the first and second transmission means (1a, 2a) are designed for wireless transmission of signals which are in the order of magnitude of 433.05 - 434.79 MHz.

8. Accessory device according to one of the preceding claims,
**characterized in that**
it has loudspeakers (4, 5) for reproducing sound signals.

9. Accessory device according to one of Claims 2 to 8,
**characterized in that**
the input means have a microphone and/or a trackball.

10. Accessory device according to one of the preceding claims,
**characterized in that**
the screen is a flat screen, and/or the screen is a TFT screen or a screen having OLEDs.

11. System for displaying television broadcast and Internet signals, said system having an accessory device (AD) according to one or more of the preceding claims, a television broadcast receiver (TV) and a personal computer (PC), and the television broadcast receiver and personal computer each being provided with a radio transmitter (10, 21) or connected to the accessory device via a data line.

12. System according to Claim 11,
**characterized in that**
the television broadcast receiver is a television set, a satellite receiver or a set top box.

13. System according to Claim 11 or 12,
**characterized in that**
the television broadcast receiver and the personal computer each have a receiver (11, 22) for operating and/or data signals which are emitted wirelessly or line-conductedly by the accessory device (AD).

## Revendications

1. Dispositif accessoire (ZG) pour afficher des signaux de télédiffusion et des signaux Internet, lequel dispositif comporte :
- des premiers moyens de réception (1) pour une réception sans fil ou filaire de signaux de télédiffusion, qui sont transmis par un récepteur de diffusion TV,
- des seconds moyens de réception (2) pour une réception sans fil ou filaire de signaux Internet, qui sont reçus par un ordinateur personnel,
- des moyens de traitement de signaux (5) pour les signaux de télédiffusion reçue sans fil ou de façon filaire et les signaux Internet reçus sans fil ou de façon filaire pour générer des signaux d'affichage, et
- un écran (3) pour afficher les signaux d'affichage,
**caractérisé en ce que**
le dispositif accessoire (ZG) présente trois modes d'affichage, dont un premier mode d'affichage est un affichage de signaux radio, un second mode d'affichage est un affichage de signaux Internet et un troisième mode d'affichage est un affichage conjoint de signaux de télévision et de signaux Internet, dans lequel
les premiers et seconds moyens de réception (1, 2) sont des moyens de réception radio et le dispositif accessoire (ZG) présente un premier moyen d'émission (1a) pour émettre sans fil ou de façon filaire des signaux de commande et/de données pour le récepteur de diffusion TV précité et/ou présente des seconds moyens d'émission (2a) pour émettre de façon sans fil ou filaire des signaux de commande et/ou de données pour le l'ordinateur personnel précité.

2. Dispositif accessoire selon la revendication 1, **caractérisé en ce qu'**il comporte une mémoire (6) pour des informations de guidage d'utilisateur et les informations de guidage d'utilisateur présentent une pluralité de pages de menu.

3. Dispositif accessoire selon l'une des revendications 1 ou 2, **caractérisé en ce qu'**il présente des moyens de saisie et les moyens de saisie présentent un stylet de saisie (7) et/ou l'écran (3) est un écran tactile.

4. Dispositif accessoire selon la revendication 3, **caractérisé en ce qu'**il présente des premiers moyens de détection de saisie, qui détectent l'endroit d'une saisie par stylet, ainsi que des seconds moyens de détection de saisie, qui contiennent des moyens de reconnaissance d'écriture.

5. Dispositif accessoire selon la revendication 4, **caractérisé en ce que** sur l'écran peut être affiché un champ de saisie d'écriture (8), qui est divisé en différents champs de saisie pour des caractères alphanumériques et le champ de saisie d'écriture (8) présente deux champs de saisie pour des caractères alphanumériques, dans lesquels alternativement les lettres ou les chiffres consécutifs d'un signal de saisie alphanumérique peuvent être saisis.

6. Dispositif accessoire selon l'une des revendications précédentes 2 à 5, **caractérisé en ce que** son écran (3) présente un champ de saisie (9), lors du contact duquel au moyen du stylet de saisie, un affichage sur l'écran d'informations de guidage d'utilisateurs est déclenché.

7. Dispositif accessoire selon l'une des revendications précédentes, **caractérisé en ce que** les premiers et seconds moyens de réception (1, 2) sont prévus pour la réception de signaux, qui se trouvent dans l'ordre de grandeur de 2,4-2,4835 et/ou de 5,725-5,875 GHz et/ou les premiers et seconds moyens d'émission (1a, 2a) sont prévus pour l'émission sans fil de signaux, qui se trouvent dans l'ordre de grandeur de 433,05-434,79 MHz.

8. Dispositif accessoire selon l'une des revendications précédentes, **caractérisé en ce qu'**il présente des haut-parleurs (4, 5) pour la reproduction de signaux sonores.

9. Dispositif accessoire selon l'une des revendications 2 à 8, **caractérisé en ce que** les moyens de saisie présentent un microphone et/ou un trackball.

10. Dispositif accessoire selon l'une des revendications précédentes, **caractérisé en ce que** l'écran est un écran plat et/ou l'écran est un écran TFT ou un écran OLED.

11. Installation pour l'affichage de signaux de télédiffusion et de signaux Internet, qui présente un dispositif accessoire (ZG) selon l'une ou plusieurs des revendications précédentes, un récepteur de diffusion TV (TV) et un ordinateur personnel (PC), dans laquelle le récepteur de diffusion TV et l'ordinateur personnel sont munis respectivement d'un émetteur radio (10, 21) ou sont reliés au dispositif accessoire par l'intermédiaire d'une ligne de données.

12. Installation selon la revendication 11, **caractérisée en ce que** le récepteur de diffusion TV est un téléviseur, un récepteur satellite ou un décodeur.

13. Installation selon la revendication 11 ou 12, **caractérisée en ce que** le récepteur de diffusion TV et l'ordinateur personnel présentent respectivement un récepteur (11, 22) pour les signaux de commande et/ou de données émis de façon filaire ou sans fil depuis le dispositif accessoire (ZG).
